(19) Europäisches Patentamt
European Patent Office
Office européen des brevets

(11) EP 4 110 849 B1

(12) **EUROPEAN PATENT SPECIFICATION**

(45) Date of publication and mention of the grant of the patent:
**24.12.2025 Bulletin 2025/52**

(21) Application number: **21710579.0**

(22) Date of filing: **26.02.2021**

(51) International Patent Classification (IPC):
***C08G 64/12** (2006.01)* ***C08K 5/00** (2006.01)*
***C08K 5/357** (2006.01)* ***G02B 1/04** (2006.01)*

(52) Cooperative Patent Classification (CPC):
(C-Sets available)
**G02B 1/041; C08L 69/00** (Cont.)

(86) International application number:
**PCT/IB2021/051644**

(87) International publication number:
**WO 2021/171262 (02.09.2021 Gazette 2021/35)**

(54) **HIGH HEAT POLYCARBONATE COPOLYMER FORMULATIONS**

HOCHWÄRMEBESTÄNDIGE POLYCARBONAT-COPOLYMER-FORMULIERUNGEN

FORMULATIONS DE COPOLYMÈRE DE POLYCARBONATE À HAUTE TEMPÉRATURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2020 IN 202011008641**

(43) Date of publication of application:
**04.01.2023 Bulletin 2023/01**

(73) Proprietor: **SHPP Global Technologies B.V.
4612 PX Bergen op Zoom (NL)**

(72) Inventors:
- **ZHAO, Wei
Mt. Vernon, Indiana 47620 (US)**
- **HEIN, Chris
Mt. Vernon, Indiana 47620 (US)**
- **ZHOU, Bing
Mt. Vernon, Indiana 47620 (US)**
- **BALAKRISHNAN, Parthipan
Bangalore 562125 (IN)**

(74) Representative: **J A Kemp LLP
80 Turnmill Street
London EC1M 5QU (GB)**

(56) References cited:
**WO-A1-2013/152292**
**WO-A1-2014/066784**
**WO-A1-2017/203493**
**US-A1- 2007 219 343**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 69/00, C08L 69/00, C08K 5/005;**
**C08L 69/00, C08L 69/00, C08K 5/357;**
**G02B 1/041, C08L 69/00**

## Description

### BACKGROUND OF THE INVENTION

#### A. Field of the Invention

The invention generally concerns compositions containing co-polycarbonate. In particular, the invention includes a thermoplastic composition comprising: a high heat copolycarbonate comprising recurring units of a phthalimidine carbonate and a low heat monomer; and 0.05 wt. % to 0.25 wt. % of a benzoxazinone UV absorber.

#### B. Description of Related Art

Polycarbonates are useful in the manufacture of articles for a wide range of applications. Examples include automotive, lighting, and lens applications. Polycarbonate containing thermoplastic compositions with high heat resistance show improved thermal performance. Accordingly, polycarbonates having improved thermal performance such as high heat deflection temperature, high clarity such as high light transmission, low color, and are high in demand.

A problem with such polycarbonates, however, is that they are susceptible to yellowing through degradation, such as via oxidation, when exposed to natural light, artificial light, and/or UV light. Such yellowing can make polycarbonates less suitable for their use as optical components, lenses, optical sensors, etc. Attempts to obtain stabilized (e.g., reduced yellowing) polycarbonate compositions have been made. For example, U.S. Patent 8,748,518 describes a polycarbonate composition containing 5 wt. %, of UV stabilizers. While the use of UV stabilizers can help to reduce yellowing when the polymer compositions are exposed to light, a potential issue is the costs of using higher amounts of such stabilizers. Further, while the UV stabilizers help to reduce yellowing upon light exposure, the initial addition of UV stabilizers can negatively affect the optical clarity of the polymer compositions. WO 2017/203493 A1 relates to polycarbonate compositions, and more particularly, to high heat copolycarbonate compositions having enhanced optical properties. According to paragraph [0008], a thermoplastic composition comprising phthalimidine copolycarbonates such as N-phenylphenolphthaleinyl bisphenol, 2,2-bis(4- hydro)-bisphenol A copolycarbonate ("PPPBP-BPA"), optionally a bisphenol A homopolymer, and an organosulfonic acid, acid ester, or acid anhydride stabilizer having desirable high glass transition temperature and enhanced optical properties is disclosed. In table 8, examples 50-52 and 59-60, compositions comprising thermoplastic composition comprising phthalimidine copolycarbonate and 0,3% of the UV stabilizer UVA 234 are described.

While products and polycarbonate based compositions are known, there is a continuing interest in developing polycarbonate based compositions which have the advantageous physical and chemical properties for producing color-stabilized transparent products.

### SUMMARY OF THE INVENTION

A discovery has been made that provides a solution to at least some of the problems associated with polycarbonate compositions. In one aspect, the discovery includes providing a thermoplastic composition comprising a co-polycarbonate and 0.05 wt. % to 0.25 wt. % of a benzoxazinone UV absorber. In particular, it was discovered that the 0.05 wt. % to 0.25 wt. % range, preferably 0.1 wt. % to 0.2 wt. %, of the benzoxazinone UV absorber provides for a polycarbonate composition that has acceptable optical clarity, thereby allowing it to be used in optical applications (e.g., optical components in electronic devices, lenses (e.g., flashlight lens, ophthalmic lens, etc.), optical sensors, etc.). In one aspect, the optical clarity can include the polymer composition having a yellowness index of less than or equal to 2.5, less than or equal to 1.4, less than or equal to 1.3, 0.8 to 2.5, 0.8 to 1.4, or 0.9 to 1.3, as measured by ASTM D1925 on a 1 mm plaque consisting the thermoplastic composition. Further, this range also provides color stability to the resulting composition in that it can reduce yellowing of the composition when exposed to light. It was also discovered that: (1) going below 0.05 wt. %, preferably below 0.1 wt. %, negatively affects the color stability of the polymer composition such that unacceptable yellowing can occur when exposed to light; and/or (2) going above 0.25 wt. %, preferably above 0.2 wt. %, can introduce too much color to the initial polymer composition (e.g., addition of the benzoxazinone UV absorber at these amounts can result in the composition having a high initial yellow color value-e.g., a yellowness index of greater than 2.5, or greater than 1.4, or greater than 1.3, as measured by ASTM D1925 on a 1 mm plaque consisting the thermoplastic composition). In some aspects, the discovered range can also provide a costs-savings benefit in that lower amounts of the benzoxazinone UV absorber can be used.

The present invention is directed to a thermoplastic composition. The thermoplastic composition comprises 1) a high heat copolycarbonate comprising recurring units of i) a phthalimidine carbonate and ii) a low heat monomer, and 2) 0.05 wt. % to 0.25 wt. % of a benzoxazinone UV absorber. The high heat copolycarbonate can have a glass transition temperature of 197 to 220 °C, determined by differential scanning calorimetry as per ASTM D3418 with a 20 °C/min heating

rate. In some aspects, the benzoxazinone UV absorber can be 2,2'-(1,4-Phenylene)bis[4H-3,1-benzoxazin-4-one]. The thermoplastic composition comprises 0.05 wt. % to 0.25 wt. %, preferably 0.1 wt. % to 0.2 wt. %, more preferably 0.1 wt. % to 0.16 wt. % of the benzoxazinone UV absorber. The benzoxazinone UV absorber can be 2,2'-(1,4-Phenylene)bis[4H-3,1-benzoxazin-4-one]. In some aspects, the phthalimidine carbonate can have the chemical formula of Formula I

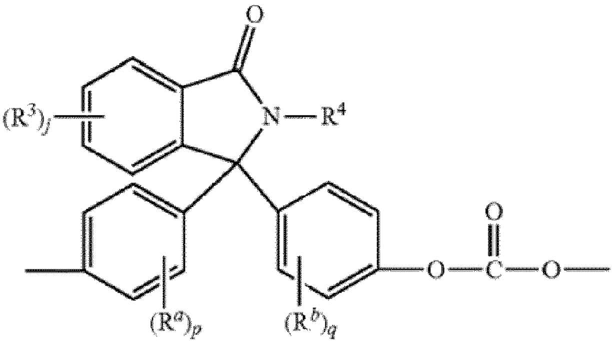

Formula I

wherein $R^a$ and $R^b$ each can be independently a $C_{1-12}$ alkyl, a $C_{2-12}$ alkenyl, a $C_{3-8}$ cycloalkyl, or a $C_{1-12}$ alkoxy. Each $R^3$ can be independently a $C_{1-6}$ alkyl. $R^4$ can be hydrogen, a $C_{1-6}$ alkyl, an aryl, or a substituted aryl. j, p, and q can be independently 0, 1, 2, 3 or 4. In some aspects, j, p and q can be 0, $R^4$ can be phenyl and the phthalimidine carbonate can have the chemical formula of Formula II

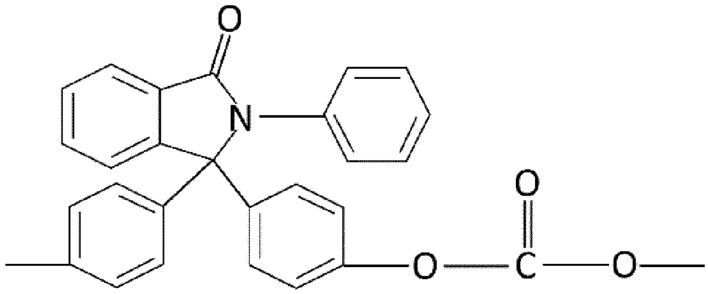

Formula II

In some aspects, the high heat copolycarbonate can include 5-95 mol. %, preferably 20-80 mol. %, or more preferably 30-60 mol. % of the phthalimidine carbonate, such as phthalimidine carbonate of Formula I, e.g. of Formula II. In some aspects, the low heat monomer can be a low heat carbonate. In some aspects, the low heat monomer is a low heat carbonate, wherein the low heat carbonate has the chemical formula of Formula III

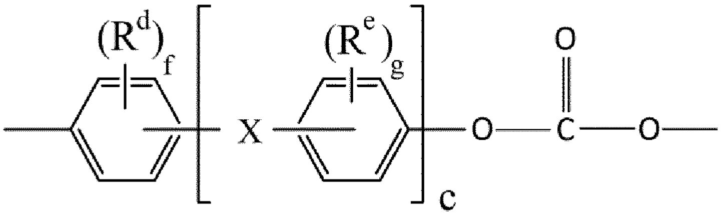

Formula III

wherein $R^d$ and $R^e$ can each be independently a halogen, a $C_{1-3}$ alkoxy, or a $C_{1-3}$ alkyl. c can be 0, 1, 2, 3, or 4. f and g can each be independently 0 or 1. X can be a single bond, -O-, -C(O)-, a $C_{1-6}$ alkyl, a $C_{1-6}$ substituted alkyl, a $C_{3-6}$ cycloalkyl, or a $C_{1-6}$ heteroalkyl. In some particular aspects, c can be 1, f and g can be 0, X can be $-C(CH_3)_2-$ and the low heat carbonate can have the chemical formula of Formula IV

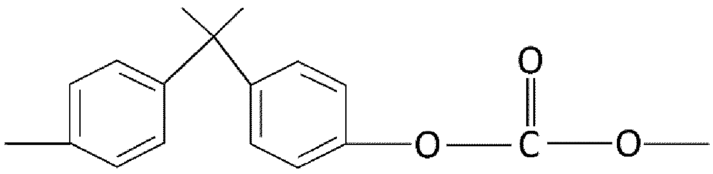

Formula IV

In some aspects, the high heat copolycarbonate comprises 5-95 mol. %, preferably 30-80 mol. %, or more preferably 40-70 mol. % of the low heat carbonate of Formula III, such as low heat carbonate of Formula IV. In the high heat copolycarbonate, the phthalimidine carbonate and the low heat carbonate units can be arranged in blocks, alternatively and/or randomly. In some particular aspects, the high heat copolycarbonate comprises 30-60 mol. % of the phthalimidine carbonate of Formula II and 40-70 mol. % of the low heat carbonate of Formula IV. In some aspects, the thermoplastic composition can include 95 wt. % to 99.5 wt. % of the high heat copolycarbonate. The high heat copolycarbonate can include a first high heat copolycarbonate and a second high heat copolycarbonate. The first high heat copolycarbonate can contain 30-40 mol. % of the phthalimidine carbonate of Formula II and 60-70 mol. % of the low heat carbonate of Formula IV. The second high heat copolycarbonate can include greater than 40 to 50 mol. % of the phthalimidine carbonate of Formula II and 50 to less than 60 mol. % of the low heat carbonate of Formula IV. The first high heat copolycarbonate and the second high heat copolycarbonate can be different, e.g. can contain different mol.% of the phthalimidine carbonate and/or the low heat carbonate. In some aspects, the high heat copolycarbonate comprises a first high heat copolycarbonate comprising 30-40 mol. % of the phthalimidine carbonate of Formula II and 60-70 mol. % of the low heat carbonate of Formula IV, and a second high heat copolycarbonate comprising greater than 40 to 50 mol. % of the phthalimidine carbonate of Formula II and 50 to less than 60 mol. % of the low heat carbonate of Formula IV, wherein the first and second high heat copolycarbonate are different. In some aspects, the thermoplastic composition comprises 45 wt.% to 54 wt. % of the first high heat copolycarbonate and 45 wt.% to 54 wt. % of the second high heat copolycarbonate. The weight average molecular weight (Mw) of the first high heat copolycarbonate and/or the second high heat copolycarbonate can be 17,000 D to 28,000 D, preferably 20,000 D to 24,000 D. In some particular aspects, the thermoplastic composition can include 45 wt.% to 54 wt. % of the first high heat copolycarbonate, 45 wt.% to 54 wt. % of the second high heat copolycarbonate, and 0.1 wt. % to 0.2 wt. % of the 2,2'-(1,4-Phenylene)bis[4H-3,1-benzoxazin-4-one]. In some aspects, the thermoplastic composition can further contain an additive selected from a filler, a catalyst, an antioxidant, a thermal stabilizer, a quencher, a base scavenger, a colorant, a light stabilizer, a plasticizer, a lubricant such as a mold release agent, an antistatic agent, a flame retardant, an anti-drip agent, a hydrostabilizer, or a combination thereof. In some aspects, the colorant can be Solvent Blue 97 and/or Solvent Violet 36. In some aspects, the thermal stabilizer can be a phosphite stabilizer. In some aspects, the anti-oxidant can be a hindered phenol anti-oxidant. In some aspects, the lubricant e.g. mold release agent can be pentaerythritol tetrastearate. In some aspects, the base scavenger can be butyl tosylate. In some particular aspects, the thermoplastic composition can include 0.1 ppm to 5 ppm of colorant such as Solvent Blue 97 and Solvent Violet 36, 0.01 wt. % to 1 wt. % of the thermal stabilizer such as a phosphite stabilizer, 0.01 wt. % to 0.5 wt. % of an anti-oxidant such as a hindered phenol anti-oxidant, 0.01 wt. % to 1 wt. % of a lubricant such as pentaerythritol tetrastearate, or 2 ppm to 24 ppm of a base scavenger such as butyl tosylate or any combination thereof. In some aspects, the thermoplastic composition can include 45 wt.% to 54 wt. % of the first high heat copolycarbonate, 45 wt.% to 54 wt. % of the second high heat copolycarbonate, 0.1 wt. % to 0.2 wt. % of the 2,2'-(1,4-Phenylene)bis[4H-3,1-benzoxazin-4-one], 0.1 ppm to 5 ppm of Solvent Blue 97 and Solvent Violet 36, 0.01 wt. % to 1 wt. % of a phosphite stabilizer, 0.01 wt. % to 0.5 wt. % of a hindered phenol anti-oxidant, 0.01 wt. % to 1 wt. % of pentaerythritol tetrastearate, and 2 ppm to 24 ppm of butyl tosylate. The thermoplastic composition can have a yellowness index (YI) of less than or equal to 2.5 or 1.4, or less than 1.3, or less than 1, or 0.8 to 1.4, or 0.9 to 1.3, or equal to any one of, at most any one of, or between any two of 0.8, 0.9, 1, 1.1, 1.2, 1.3, 1.4, 1.5, 1.6, 1.7, 1.8, 1.9, 2, 2.1, 2.2, 2.3, 2.4, and 2.5 as measured by ASTM D1925 on a 1 mm plaque, such as molded plaque consisting the thermoplastic composition. In some aspects, the thermoplastic composition can have a percent transmission (%T), above 90 %, such as 90 % to 95 %, or 90 % to 93 %, or 90 % to 91 %, or 90.04 to 90.6 %, or 90.1 to 90.6 %, as measured as per ASTM D1003-00 on a molded plaque with a 1.0 mm thickness. In some aspects, the thermoplastic composition can have a Haze 0.4 to 0.8 % or 0.5 to 0.7 % or 0.53 to 0.58 % as per ASTM D1003-00 using the color space CIE1931 (Illuminant C and a 2° observer) on a molded plaque with a 1 mm thickness.

The thermoplastic composition can be an extruded, a blow-molded, or an injection-molded thermoplastic composition. One aspect of the invention is directed towards an article of manufacture comprising the thermoplastic composition of the invention. In some aspects, the article of manufacture can be transparent. In some particular aspects, the article of manufacture can be an optical component of an electronic device, a flash light lens, a cover window of an optical device, a camera lens, a sensor lens, an illumination lens, a safety glass lens, an ophthalmic corrective lens, or an

imaging lens. In some particular aspects, the article of manufacture can be an optical component of an electronic device or a flash light lens. The article of manufacture can be an extruded, a blow-molded, or an injection-molded article.

A method of making a thermoplastic composition is as follows. The method can include providing and/or forming a high heat copolycarbonate and compounding a benzoxazinone UV absorber with the high heat copolycarbonate. The high heat copolycarbonate can be formed by a polymerization process known in the art. The first and the second high heat copolycarbonate can be formed separately and then compounded with the benzoxazinone UV absorber together. The compounding process can include obtaining a melted composition containing the high heat copolycarbonate and the benzoxazinone UV absorber, extruding the melted composition to form an extrudate, and quenching and pelletizing the extrudate to form the thermoplastic composition. The melted composition can be extruded through a die with a twin screw extruder. The melted composition can be obtained by mixing the high heat copolycarbonate in a solid state, such as beads, pellets, powder, and/or the like, with the benzoxazinone UV absorber to form a solid mixture and melting the solid mixture to form the melted composition. The melted composition can be obtained by melting the high heat copolycarbonate to form a polymer melt and adding the benzoxazinone UV absorber to the polymer melt to form the melted composition. The compounding can be performed with an extruder, such as a twin screw extruder.

Other embodiments of the invention are discussed throughout this application.

The following includes definitions of various terms and phrases used throughout this specification.

The term "low heat carbonate" refers to a carbonate monomer where a polycarbonate homopolymer derived from the carbonate monomer has a glass transition temperature of less than 170°C as determined by differential scanning calorimetry as per ASTM D3418 with a 20°C/min heating rate.

The terms "about" or "approximately" are defined as being close to as understood by one of ordinary skill in the art. In one example, the terms are defined to be within 10%, preferably within 5%, more preferably within 1%, and most preferably within 0.5%.

The terms "wt.%," "vol.%," or "mol.%" refers to a weight percentage of a component, a volume percentage of a component, or molar percentage of a component, respectively, based on the total weight, the total volume of material, or total moles, that includes the component. In an example, 10 grams of component in 100 grams of the material is 10 wt.% of component. The term "ppm" refer to parts per million by weight, based on the total weight, of material that includes the component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The co-polycarbonate polymeric resin material of the present invention can "comprise," "consist(s) essentially of," or "consist of" particular ingredients, components, compositions, *etc.* disclosed throughout the specification. In one aspect of the present invention, and with reference to the transitional phrase "consist(s) essentially of" or "consisting essentially of," a basic and novel characteristic of the present invention can include the co-polycarbonate compositions having (1) good optical clarity and/or (2) color stability when exposed to light.

The term "alkyl," by itself or as part of another substituent, means, unless otherwise stated, a linear (i.e. unbranched) or branched carbon chain, which may be fully saturated, mono- or polyunsaturated. An unsaturated alkyl group is one having one or more double bonds or triple bonds. Alkenyl group is a unsaturated alkyl group having at least one double bond. Saturated alkyl groups include those having one or more carbon-carbon double bonds (alkenyl) and those having one or more carbon-carbon triple bonds (alkynyl). The groups, $-CH_3$ (Me),$-CH_2CH_3$ (Et), $-CH_2CH_2CH_3$ (*n*-Pr), $-CH(CH_3)_2$ (*iso*-Pr), $-CH_2CH_2CH_2CH_3$ (*n*-Bu),$-CH(CH_3)CH_2CH_3$ (*sec*-butyl), $-CH_2CH(CH_3)_2$ (*iso*-butyl), $-C(CH_3)_3$ (*tert*-butyl), $-CH_2C(CH_3)_3$ (neo-pentyl), are all examples of alkyl groups. $C_n$ alkyl refers to alkyl group with n carbon atoms, e.g $C_1$ refers to methyl. $C_n$ alkenyl refers to alkenyl group with n carbon atoms, e.g $C_2$ alkenyl refers to ethenyl group.

The term "halogenated alkyl" means a straight-chain or branched saturated monovalent hydrocarbon group of one to twelve carbon atoms, wherein at least one of the carbon atoms is replaced by a halogen atom (e.g. fluoromethyl, 1-bromo-ethyl, 2-chloro-pentyl, 6-iodo-hexyl, and the like).

The term "heteroalkyl," by itself or in combination with another term, means, unless otherwise stated, a linear or branched chain having at least one carbon atom and at least one heteroatom selected from the group consisting of O, N, S, P, and Si. In certain embodiments, the heteroatoms are selected from the group consisting of O and N. The heteroatom(s) may be placed at any interior position of the heteroalkyl group or at the position at which the alkyl group is attached to the remainder of the molecule. Up to two heteroatoms may be consecutive. The following groups are all examples of heteroalkyl groups: trifluoromethyl, $-CH_2F$, $-CH_2$ Cl, $-CH_2Br$, $-CH_2$ OH, $-CH_2$ $OCH_3$, $-CH_2$ $OCH_2$ $CF_3$ , $-CH_2OC(O)CH_3$, $-CH_2NH_2$, $-CH_2$ $NHCH_3$,$-CH_2N(CH_3)_2$, $-CH_2CH_2Cl$, $-CH_2CH_2OH$, $CH_2CH_2OC(O)CH_3$, $-CH_2CH_2NHCO_2C(CH_3)_3$, and-$CH_2$ $Si(CH_3)_3$.

The terms "cycloalkyl" and "heterocycle," by themselves or in combination with other terms, means cyclic versions of "alkyl" and "heteroalkyl", respectively. Additionally, for heterocycle, a heteroatom can occupy the position at which the heterocycle is attached to the remainder of the molecule. $C_n$ cycloalkyl refers to cycloalkyl group with n carbon atoms, e.g $C_3$ cycloalkyl refers to cyclopentyl.

The term "aryl" means a polyunsaturated, aromatic, hydrocarbon substituent. Aryl groups can be monocyclic or polycyclic (e.g., 2 to 3 rings that are fused together or linked covalently). The term "heteroaryl" refers to an aryl group that contains one to four heteroatoms selected from N, O, and S. A heteroaryl group can be attached to the remainder of the molecule through a carbon or heteroatom. Examples of aryl and heteroaryl groups include phenyl, 1-naphthyl, 2-naphthyl, 4-biphenyl, 1-pyrrolyl, 2-pyrrolyl, 3-pyrrolyl, 3-pyrazolyl, 2-imidazolyl, 4-imidazolyl, pyrazinyl, 2-oxazolyl, 4-oxazolyl, 2-phenyl-4-oxazolyl, 5-oxazolyl, 3-isoxazolyl, 4-isoxazolyl, 5-isoxazolyl, 2-thiazolyl, 4-thiazolyl, 5-thiazolyl, 2-furyl, 3-furyl, 2-thienyl, 3-thienyl, 2-pyridyl, 3-pyridyl, 4-pyridyl, 2-pyrimidyl, 4-pyrimidyl, 5-benzothiazolyl, purinyl, 2-benzimidazolyl, 5-indolyl, 1-isoquinolyl, 5-isoquinolyl, 2-quinoxalinyl, 5-quinoxalinyl, 3-quinolyl, and 6-quinolyl. Substituents for each of the above noted aryl and heteroaryl ring systems are selected from the group of acceptable substituents described below.

Various groups are described herein as substituted or unsubstituted (i.e., optionally substituted). Optionally substituted groups may include one or more substituents independently selected from: halogen, nitro, cyano, hydroxy, amino, mercapto, formyl, carboxy, oxo, carbamoyl, substituted or unsubstituted alkyl, substituted or unsubstituted heteroalkyl, alkoxy, alkylthio, alkylamino, $(alkyl)_2$amino, alkylsulfinyl, alkylsulfonyl, arylsulfonyl, substituted or unsubstituted cycloalkyl, substituted or unsubstituted heterocyclyl, substituted or unsubstituted aryl, and substituted or unsubstituted heteroaryl. In certain aspects the optional substituents may be further substituted with one or more substituents independently selected from: halogen, nitro, cyano, hydroxy, amino, mercapto, formyl, carboxy, carbamoyl, unsubstituted alkyl, unsubstituted heteroalkyl, alkoxy, alkylthio, alkylamino, $(alkyl)_2$amino, alkylsulfinyl, alkylsulfonyl, arylsulfonyl, unsubstituted cycloalkyl, unsubstituted heterocyclyl, unsubstituted aryl, or unsubstituted heteroaryl. Exemplary optional substituents include: -OH, oxo (=O), -Cl, -F, Br, $C_{1-4}$alkyl, phenyl, benzyl, $-NH_2$, $-NH(C_{1-4}alkyl)$, $-N(C_{1-4}alkyl)_2$, $-NO_2$, $-S(C_{1-4}alkyl)$,$-SO_2(C_{1-4}alkyl)$, $-CO_2(C_{1-4}alkyl)$, and $-O(C_{1-4}alkyl)$. In certain aspects a heterocycle or a heteroaryl is optionally substituted with 1 to 3 halogens, $C_1$ to $C_3$ alkyl, OH, $NH_2$, $C(O)NH_2$, $CO_2H$, $CH_2OH$ and -C(O)NHR', C(O)NR'$_2$, OR', $CH_2OR'$, NHR' or $N(R')_2$, where in R' is $C_1$ to $C_3$ alkyl or halogenated alkyl. In other aspects a cycloakyl can be optionally substituted with 1 to 3 halogens, $C_1$ to $C_3$ alkyl, OH, $NH_2$, $C(O)NH_2$, $CO_2H$, $CH_2OH$, C(O)NHR", C(O)NR"$_2$, OR" $CH_2OR"$, NHR", -N(R")$_2$ or combinations thereof, where R" is $C_1$ to $C_3$ alkyl or halogenated alkyl.

The term "alkoxy" means a group having the structure -OR', where R' is an optionally substituted alkyl or cycloalkyl group. The term "heteroalkoxy" similarly means a group having the structure -OR, where R is a heteroalkyl or heterocyclyl. $C_n$ alkoxy refers to alkoxy group with n carbon atoms, e.g $C_1$ alkoxy refers to methoxy.

As used herein, the term "nitro" means $-NO_2$ ; the term "halo", "halogen" or "halogenated" designates -F, -Cl, -Br or -I; the term "mercapto" means -SH; the term "cyano" means -CN; the term "azido" means $-N_3$ ; the term "silyl" means $-SiH_3$ , and the term "hydroxyl" means -OH.

The term "amino" means a group having the structure -NR'R", where R' and R" are independently hydrogen or an optionally substituted alkyl, heteroalkyl, cycloalkyl, or heterocyclyl group. The term "amino" includes primary, secondary, and tertiary amines.

The term "oxo" as used herein means an oxygen that is double bonded to a carbon atom.

The term "alkylsulfonyl" as used herein means a moiety having the formula $-S(O_2)-R'$, where R' is an alkyl group. R' may have a specified number of carbons (e.g. "$C_1$-$_4$ alkylsulfonyl").

Unless otherwise specified, the compounds described herein are meant to encompass their isomers as well.

Other objects, features and advantages of the present invention will become apparent from the following detailed description and examples. It should be understood, however, that the detailed description and examples, while indicating specific embodiments of the invention, are given by way of illustration only..

## BRIEF DESCRIPTION OF THE DRAWINGS

Advantages of the present invention may become apparent to those skilled in the art with the benefit of the following detailed description and upon reference to the accompanying drawings.

FIG. 1 Percent transmission for the polymer compositions of Table 1.
FIG. 2 Delta E for the polymer compositions of Table 1 with UV exposure of 0, 100, 200, and 300 hrs.

Specific embodiments of the invention are shown by way of example in the drawings.

DETAILED DESCRIPTION OF THE INVENTION

A discovery has been made that provides a solution to at least some of the problems associated with polycarbonate compositions. In one aspect, the discovery can include a thermoplastic composition comprising a high heat copolycarbonate and 0.05 wt. % to 0.25 wt. % of a benzoxazinone UV absorber. As illustrated in Example 1, polymer compositions of the current invention can have improved color-stability and optical properties compared to comparative compositions containing lower and higher amounts of UV absorbers.

These and other aspects of the present invention are discussed in further detail in the following sections.

A. High heat co-polycarbonate

The high heat copolycarbonate of the present invention can comprise recurring units of the phthalimidine carbonate of Formula I, e.g. of Formula II and a low heat monomer. In certain aspects, the low heat monomer can be a low heat carbonate. In some aspects, the low heat carbonate can have the formula of Formula III, e.g. of Formula IV. The high heat copolycarbonate can be a polycarbonate copolymer as described in US7,277,230, WO2007/136934.

The phthalimidine carbonate of Formula I can be derived from phthalimidine derivatives having the chemical formula of Formula V:

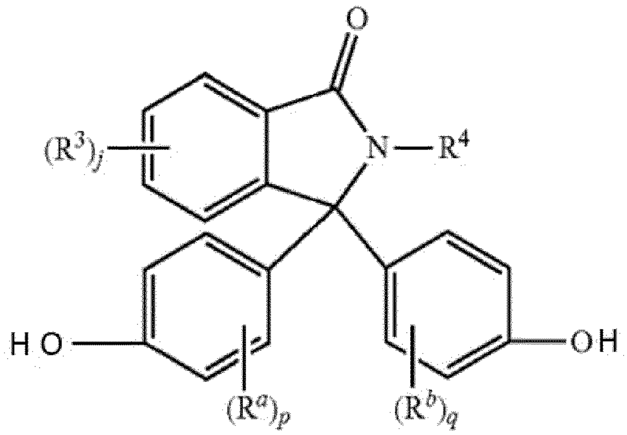

Formula V

wherein $R^a$, $R^b$, $R^3$, $R^4$, p, q, j are as defined above. Some illustrative examples of the phthalimidine derivatives having the chemical formula of Formula V that can be used are described, for example, in WO2007/136934. Examples of the phthalimidine derivatives having the chemical formula of Formula V includes a 2-aryl-3,3'-Bis (4-Hydroxy Phenyl) Phthalimidine such as 2-Phenyl-3,3'-Bis (4-Hydroxy Phenyl) Phthalimidine (PPPBP). In some particular aspects, the phthalimidine carbonate having the chemical formula of Formula II can be derived from PPPBP.

The low heat carbonate of Formula III can be derived from aromatic dihydroxides having the chemical formula of Formula VI

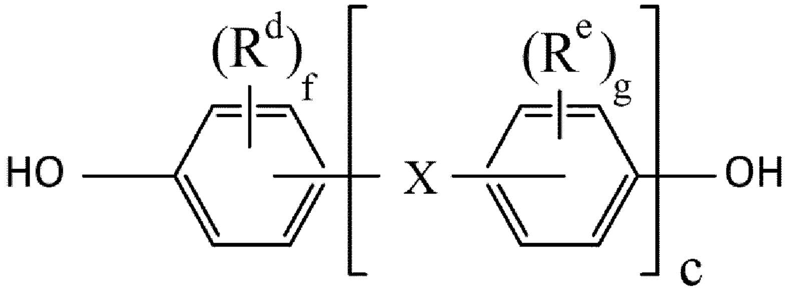

Formula VI

wherein $R^d$, $R^e$, X, f, g, and c are as defined above. In some aspects, X in Formula VI can a bridging group connecting the two hydroxy-substituted aromatic groups, where the bridging group and the hydroxy substituent of each $C_6$ arylene group are disposed ortho, meta, or para (preferably para) to each other on the $C_6$ arylene group. Some illustrative examples of aromatic dihydroxides having the chemical formula of Formula VI that can be used are described, for example, in WO 2013/175448 A1, US 2014/0295363, and WO 2014/072923. Examples of the aromatic dihydroxides having the chemical formula of Formula VI can include 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like. In some particular aspects, the low heat carbonate having the chemical formula of Formula IV can be derived from Bisphenol A (BPA).

In some aspects, the high heat copolycarbonate can comprise i) 5-95 mol. %, preferably 20-80 mol. %, or more preferably 30-60 mol. % or at least any one of, equal to any one of, or between any two of 5, 10, 20, 25, 30, 35, 40, 45, 50, 55, 60, 65, 70, 80, 90 and 95 mol.% of the phthalimidine carbonate, such as the phthalimidine carbonate of Formula I, e.g. of Formula II and ii) 5-95 mol. %, preferably 30-80 mol. %, or more preferably 40-70 mol. % or at least any one of, equal to any one of, or between any two of 5, 10, 20, 30, 35, 40, 45, 50, 55, 60, 65, 70, 75, 80, 90, and 95 mol.% of the low heat carbonate of Formula III, such as low heat carbonate of Formula IV. In some aspects, the high heat copolycarbonate can comprise a first high heat copolycarbonate and a second high heat copolycarbonate. The first high heat copolycarbonate can comprise 30-40 mol. % or at least any one of, equal to any one of, or between any two of 30, 31, 32, 33, 34, 35, 36, 37, 38, 39 and 40 mol. % of the phthalimidine carbonate of Formula II and ii) 60-70 mol. % or at least any one of, equal to any one of, or between any two of 60, 61, 62, 63, 64, 65, 66, 67, 68, 69 and 70 mol. % of the low heat carbonate of Formula IV. The second high heat copolycarbonate can comprise i) greater than 40 to 50 mol. % or at least any one of, equal to any one of, or between any two of, greater than 40, 41, 42, 43, 44, 45, 46, 47, 48, 49, and 50 mol. % of the phthalimidine carbonate of Formula II and 50 to less than 60 mol. % or at least any one of, equal to any one of, or between any two of 50, 51, 52, 53, 54, 55, 56, 57, 58, 59 and less than 60 mol. % of the low heat carbonate of Formula IV. In some aspects, the high heat copolycarbonate can further comprise recurring units of carbonates having the chemical formula of Formula VII

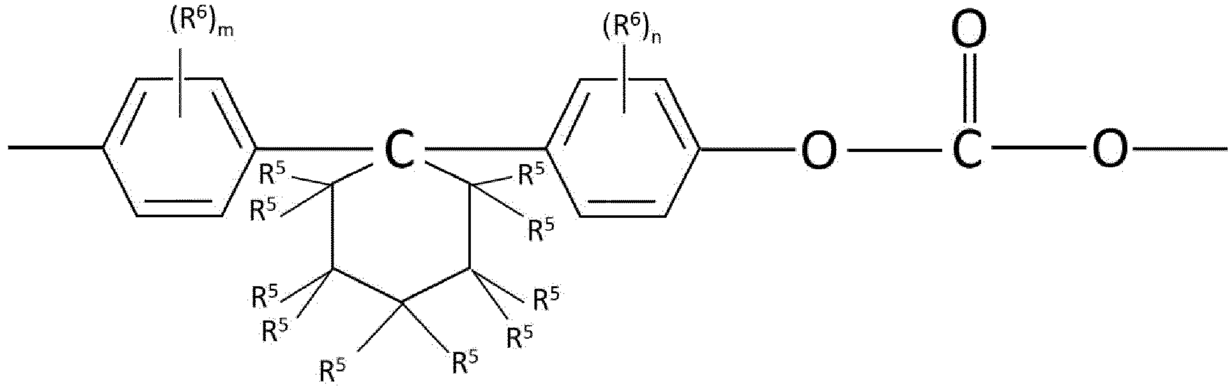

Formula VII

wherein each $R^5$ can be independently hydrogen or $C_{1-12}$ alkyl; each $R^6$ can be independently hydrogen, halogen, or $C_{1-12}$ alkyl; m and n can be independently 0, 1, 2, 3, or 4. In some aspects, in the high heat copolycarbonate, the phthalimidine carbonate units, the low heat carbonate units and carbonates of Formula VII can be arranged in blocks, alternatively and/or randomly. In some aspects, the high heat copolycarbonate does not comprise or comprises less than 2 mol. % of a monomer unit other than the monomer units of chemical formula of Formula I and Formula III or Formula I, Formula III and VII.

The high heat copolycarbonate of the present invention can have a glass transition temperature of 197 to 350 °C, or at least any one of, equal to any one of, or between any two of 197, 200, 210, 220, 230, 240, 250, 260, 270, 280, 290, 300, 310, 320, 330, 340, and 350 °C determined by differential scanning calorimetry as per ASTM D3418 with a 20°C/min heating rate. DSC measurements can be performed using a DSC TA Q20 (TA Instruments, USA) and an intracooler or chiller capable of reaching -90 °C. The measurements can be performed under inert atmosphere (e.g., nitrogen gas flow) to avoid degradation. DSC methodology can include heating the sample to 25 °C to 220 °C at a rate of 20 °C/min, holding for 1 to 4 (about 3) min at the final temperature, cooling the sample from 220 °C to 25 °C at a rate of 20 °C/min, and then heating the sample against from 25 °C to 220 °C at the same rate. Measurements can be cycled twice to ensure that the sample does not change during the measurement. The weight average molecular weight (Mw) of the first high heat copolycarbonate and/or the second high heat copolycarbonate can be 17,000 D to 28,000 D, preferably 20,000 D to 24,000 D, or at least any one of, equal to any one of, or between any two of greater than 17000, 18000, 19000, 20000, 21000, 22000, 23000, 24000, 25000, 26000, 27000, and 28000 D, as measured by gel permeation chromatography (GPC), using a crosslinked styrene-divinylbenzene column and calibrated to BPA homopolycarbonate references. GPC samples can be prepared at a concentration of 1 mg per ml and eluted at a flow rate of 1.5 ml per minute.

The high heat copolycarbonate can be manufactured by various methods known in the art. The high heat copolycarbonate can be prepared by a suitable polymerization process. The high heat copolycarbonate, such as the first heat copolycarbonate and/or the second heat copolycarbonate can be formed by a polymerization process as described in US9718918, WO2015/048735. The high heat copolycarbonate can be prepared from monomers wherein one or more of the monomers, such as PPPBP and/or BPA has a purity of at least 99.6%, at least 99.7%, or at least 99.8 %. The BPA purity of the high heat copolycarbonate may be equal to or greater than 99.6%, or equal or greater than 99.7%, or equal to or greater than 99.8% measured using HPLC. As used herein, the "BPA purity" refers to the overall purity of the BPA monomer used to prepare the high heat copolycarbonate. The BPA purity of a polycarbonate composition can be determined by a mild depolymerization followed by a HPLC analysis. For example, about 200 milligrams (mg) of the polycarbonate composition is dissolved in 5 milliliters (mL) of tetrahydrofuran (THF) and 2 ml of a 10% solution of potassium hydroxide diluted in methanol. The depolymerization of polycarbonate is carried out with the use of these solvents. The solution is shaken for 2 hours. Then, 2 mL of acetic acid are added to protonate the BPA carbonate salts and decrease the pH. The solution is shaken again for half an hour for homogenization and dissolution of all precipitates. The sample is analyzed by HPLC. The wt% of BPA impurities in the polycarbonate composition can be calculated by Equation 1.

$$\text{wt\% of impurities in BPA} = \frac{\text{wt\% of impurities} * 254}{228} \qquad \text{(Equation 1)}$$

B. Thermoplastic compositions

The thermoplastic composition of the present invention can comprise i) 95 wt. % to 99.5 % or at least any one of,

equal to any one of, or between any two of 95, 96, 97, 98, 99, and 99.5 wt. % of the high heat copolycarbonate and ii) 0.05 wt. % to 0.25 wt. % or at least any one of, equal to any one of, or between any two of 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24 and 0.25 wt. % of the benzoxazinone UV absorber. In some particular aspects, the thermoplastic composition can include i) 45 wt. % to 54 wt. % or at least any one of, equal to any one of, or between any two of 45, 46, 47, 48, 49, 50, 51, 52, 53, and 54 wt. % of the first high heat copolycarbonate, ii) 45 wt. % to 54 wt. % or at least any one of, equal to any one of, or between any two of 45, 46, 47, 48, 49, 50, 51, 52, 53, and 54 wt. % of the second high heat copolycarbonate, and iii) 0.05 wt. % to 0.25 wt. % or at least any one of, equal to any one of, or between any two of 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24 and 0.25 wt. % of the benzoxazinone UV absorber. In some aspects, the benzoxazinone UV absorber can be 2,2'-(1,4-Phenylene)bis[4H-3,1-benzoxazin-4-one] (Commercially available under the trade name of CYASORB UV-3638). In some aspects, the thermoplastic composition can have a melt volume rate (MVR) 5 to 25 cc/10 mins, preferably 8-22 cc/10 mins, more preferably 10-20 cc/10 mins as measured with 2.16 kg load, at 330 °C and 6 minute dwell time according to ASTM D1238 method.

The thermoplastic composition can also include one or more additives, with the proviso that the additive(s) are selected so as to not significantly adversely affect the desired properties of the polycarbonate composition, in particular optical clarity, and UV absorption properties. Such additives can be mixed at a suitable time during the mixing of the components for forming the composition. Examples of such additives can include a filler, a catalyst, an antioxidant, a thermal stabilizer, a quencher, a base scavenger, a colorant, a light stabilizer, a plasticizer, a lubricant , an antistatic agent, a flame retardant, an anti-drip agent, or a hydrostabilizer.

Examples of antioxidants include sterically hindered phenolic compounds, aromatic amines, a phosphite compound, carbon black and the like. Examples of phenolic antioxidants include 2,6-di-*tert*-butyl-4-methylphenol (CAS No. 128-37-0), pentaerythritol-tetrakis(3-(3,5-di-tert-butyl-4-hydroxyphenyl)propionate (CAS No. 6683-19-8), octadecyl 3-(3',5'-di-*tert*-butyl-4-hydroxyphenyl)propionate (CAS No. 2082-79-3), 1,3,5-trimethyl-2,4,6-tris-(3,5-di-tert-butyl-4-hydroxybenzyl)benzene (CAS No. 1709-70-2), 2,2'-thiodiethylenebis(3,5-di-*tert*-butyl-4-hydroxyphenyl)propionate (CAS No. 41484-35-9), calcium bis(ethyl 3,5-di-*tert*-butyl-4-hydroxybenzylphosphonate) (CAS No. 65140-91-2), 1,3,5-tris(3',5'-di-*tert*-butyl-4'-hydroxybenzyl)-isocyanurate (CAS No. 27676-62-6), 1,3,5-tris(4-*tert*-butyl-3-hydroxy-2,6-dimethylbenzyl)-1,3,5-triazine-2,4,6-(1H,3H,5H)-trione (CAS No. 40601-76-1), 3,3-bis(3-*tert*-butyl-4-hydroxyphenyl)ethylene butyrate (CAS No. 32509-66-3), 4,4'-thiobis(2-*tert*-butyl-5-methylphenol) (CAS No. 96-69-5), 2,2'-methylene-bis-(6-(1-methyl-cyclohexyl)-para-cresol) (CAS No. 77-62-3), 3,3'-bis(3,5-di-*tert*-butyl-4-hydroxyphenyl)-N,N'-hexamethylenedipropionamide (CAS No. 23128-74-7), 2,5,7,8-tetramethyl-2-(4',8',12'-trimethyltridecyl)-chroman-6-ol (CAS No. 10191-41-0), 2,2-ethylidenebis(4,6-di-*tert*butylphenol) (CAS No. 35958-30-6), 1,1,3-tris(2-methyl-4-hydroxy-5'-*tert*-butylphenyl)butane (CAS No. 1843-03-4), 3,9-bis(1,1-dimethyl-2-(beta-(3-*tert*-butyl-4-hydroxy-5-methylphenyl)propionyloxy)ethyl)-2,4,8,10-tetraoxaspiro[5.5]undecane (CAS No. 90498-90-1;), 1,6-hexanediyl-bis(3,5-bis(1,1-dimethylethyl)-4-hydroxybenzene)propanoate) (CAS No. 35074-77-2), 2,6-di-*tert*-butyl-4-nonylphenol (CAS No. 4306-88-1), 4,4'-butylidenebis(6-*tert*-butyl-3-methylphenol (CAS No. 85-60-9); 2,2'-methylene bis(6-*tert*-butyl-4-methylphenol) (CAS No. 119-47-1), triethylenglycol-bis-(3-*tert*-butyl-4-hydroxy-5-methylphenyl)propionate (CAS No. 36443-68-2), a mixture of $C_{13}$ to $C_{15}$ linear and branched alkyl esters of 3-(3',5'-di-*tert*-butyl-4'-hydroxyphenyl)propionic acid (CAS No. 171090-93-0), 2,2'-thiobis(6-*tert*-butyl-*para*-cresol) (CAS No. 90-66-4), diethyl-(3,5-di-tert-butyl-4-hydroxybenzyl)phosphate (CAS No. 976-56-7), 4,6-bis (octylthiomethyl)-*ortho*-cresol (CAS No. 110553-27-0), benzenepropanoic acid, octyl 3-(3,5-di-tert-butyl-4-hydroxyphenyl)propanoate (CAS No. 125643-61-0), 1,1,3-tris[2-methyl-4-[3-(3,5-di-tert-*butyl-4-hydroxyphenyl)propionyloxy]-5-tert-butylphenyl]butane* (CAS No. 180002-86-2), mixed styrenated phenols (CAS No. 61788-44-1), butylated, octylated phenols (CAS No. 68610-06-0), butylated reaction product of p-cresol and dicyclopentadiene (CAS No. 68610-51-5). In some aspects, the thermoplastic composition can include 0.01 to 0.5 wt. %, or 0.01 to 0.1 wt. % of an antioxidant such as a sterically hindered phenolic compound.

Examples of thermal stabilizer additives include one of tris(2,4-di-*tert*-butylphenyl)phosphite (CAS No. 31570-04-4, Irgafos® 168 (BASF)), tris(2,4-di-*tert*-butylphenyl)phosphate (CAS No. 95906-11-9), bis(2,4-di-*tert*-butylphenyl)pentaerythritol diphosphite (CAS No. 26741-53-7); and tetrakis (2,4-di-butylphenyl)-4,4'-biphenylene diphosphonite (CAS No. 119345-01-6), and bis (2,4-dicumylphenyl)pentaerythritol diphosphite (CAS No. 154862-43-8). In some aspects, the thermoplastic composition can include 0.01 to 1 wt. %, or 0.05 to 0.5 wt. % of a thermal stabilizer such as a phosphite stabilizers.

There is considerable overlap among plasticizers, lubricants, and mold release agents, which include, for example phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol A; poly-alphaolefins; epoxidized soybean oil; silicones, including silicone oils; esters, for example, fatty acid esters such as alkyl stearyl esters, e.g., methyl stearate, stearyl stearate, pentaerythritol and tetrastearate; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl

stearate and polyethylene-polypropylene glycol copolymer in a suitable solvent; waxes such as beeswax, montan wax, paraffin wax, or the like, phosphates such as Bisphenol A bis(diphenyl phosphate) (BPADP), resorcinol bis (diphenyl phosphate) (RDP), and SOLDP (a proprietary oligomeric phosphate additive supplied by ICL Industrial Products). Examples of a lubricant such as mold release agent include glycerol monostearate, pentaerythritol tetrastearate, or a combination that includes at least one of the foregoing, preferably wherein the mold release agent is glycerol monostearate. In some aspects, the thermoplastic composition can include 0.01 to 1 wt. % or 0.1 wt. % to 0.5 wt. % of a mold release agent such as pentaerythritol tetrastearate.

Colorants can include organic dyes. The organic dye can be an organic dye used in transparent thermoplastic formulation. Examples of organic dyes include Solvent Blue 97, Solvent Violet 36, Solvent Red 135, and/or Solvent Green 3. In some aspects, the thermoplastic composition can include colorants such as Solvent Blue 97 and Solvent Violet 36, with total concentration of 2 ppm to 24 ppm.

The base scavenger can be an organosulfonic compound. Examples of the organosulfonic compound includes a $C_{1-10}$ alkyl ester of a $C_{7-12}$ alkylarylene sulfonic acid, preferably of p-toluene sulfonic acid. More preferably the stabilizer is a $C_{1-6}$ alkyl ester of p-toluene sulfonic acid, such as butyl tosylate. In some aspects, the organosulfonic compound is an anhydride of a $C_{7-12}$ alkylarylene sulfonic acid, preferably para-toluene sulfonic anhydride. In some aspects, the thermoplastic composition can include 2-40 ppm, or 0.1 to 5 ppm, or 2 to 20 ppm, or 4-15 ppm, or 4-10 ppm, or 4-8 ppm, by weight of a base scavengers such as butyl tosylate.

Examples of fillers include mineral fillers for example mica, talcum, clay, fumed silica, calcium carbonate, dolomite, wollastonite, barium sulfate, silica, kaolin, feldspar, barytes, or the like, or a combination comprising at least one of the foregoing mineral fillers. The mineral filler may have an average particle size of about 0.1 to about 20 micrometers, specifically about 0.5 to about 10 micrometers, and more specifically about 1 to about 3 micrometers. In some embodiments, the fillers can also be flame retardant synergists. Examples of fillers that are flame retardant synergists are talcum, clay, fumed silica, calcium carbonate and the like.

Examples of heat stabilizers include phenothiazine, p-methoxyphenol, cresol, benzhydrol, 2-methoxy-p-hydroquinone, 2,5-di-tert-butylquinone, diisopropylamine, and distearyl thiodipropionate (CAS No. 693-36-7). In a preferred embodiment, distearyl thiodipropionate which is sold under the trade name Irganox® PS 820 (BASF, Germany) is used. In some embodiments, a mixture of at least two of 1,3,5-trimethyl-2,4,6-tris-(3,5-di-tert-butyl-4-hydroxybenzyl) benzene sold under the trade name of Irganox® 1330 (BASF, Germany), tris[2,4-bis(2-methyl-2-propanyl)phenyl]phosphite sold under the trade name of Irgafos® 168 (BASF, Germany), pentaerythritol-tetrakis (3-(3,5-di-tert-butyl-4-hydroxyphenyl) propionate sold under the trade name Irganox® 1010 (BASF, Germany), 1,5,8,12-Tetrakis[4,6-bis(N-butyl-N-1,2,2,6,6-pentamethyl-4-piperidylamino)-1,3,5-triazin-2-yl]-1,5,8,12-tetraazadodecane sold under the trade name of Chimassorb 119 (BASF, Germany) can be used.

The thermoplastic composition can contain an epoxy additive. The inclusion of an epoxy compound can be used as a chain extender to improve molecular weight stability of the polycarbonate composition after hydroaging (for instance at 85°C and 85% relative humidity) or autoclaving at temperatures of 121°C, 134°C, 155°C, or other temperatures above 100°C. Epoxy compounds useful as additives include epoxy modified acrylic oligomers or polymers (such as a styrene-acrylate-epoxy polymer, prepared from for example a combination of: a substituted or unsubstituted styrene such as styrene or 4-methylstyrene; an acrylate or methacrylate ester of a C1-22 alkyl alcohol such as methyl acrylate, methyl methacrylate, ethyl acrylate, butyl acrylate; and an epoxy-functionalized acrylate such as glycidyl acrylate, glycidyl methacrylate, 2-(3,4-epoxycyclohexyl)ethyl acrylate, 2-(3,4-epoxycyclohexyl)ethyl methacrylate, or the like), or an epoxy carboxylate oligomer based on cycloaliphatic epoxides (such as, for example, 3,4-epoxycyclohexylmethyl-3,4-epoxycyclohexylcarboxylate, or the like). Specific commercially available exemplary epoxy functionalized stabilizers include Cycloaliphatic Epoxide Resin ERL-4221 supplied by Union Carbide Corporation (a subsidiary of Dow Chemical), Danbury, CT; and epoxy modified acrylates such as JONCRYL ADR-4300 and JONCRYL ADR-4368, available from BASF. Epoxy additives are typically used in amounts of up to 1 wt%, or 0.001-1 wt%, or 0.001-0.5 wt%, based on the total weight of the polycarbonate composition. In an aspect, the epoxy additive can be included in an amount of 0.001-0.3 wt%, or 0.01-0.3 wt%, or 0.1-0.3 wt%, based on the total weight of the polycarbonate composition. Use of greater amounts of epoxy compound can cause more splay, i.e., mold lines which fan outward from the point of injection into the mold, and observable to the unaided eye in molded optical articles comprising the polycarbonate composition.

In some aspects, the thermoplastic composition can include less than 5 ppm each of lithium, sodium, potassium, calcium, magnesium, ammonium, chlorine, bromine, fluorine, nitrite, nitrate, phosphate, sulfate, formate, acetate, citrate, oxalate, trimethylammonium, triethylammonium, or a combination thereof. In some aspects, the thermoplastic composition does not include or include less than 1 wt. % of a siloxane polymer.

C. Process to Prepare The Thermoplastic composition

The thermoplastic compositions can be manufactured by various methods known in the art. For example, powdered copolycarbonate, and other optional components can be first blended, optionally with any fillers, in a high-speed

mixer or by hand mixing. The blend can then be fed into the throat of a twin-screw extruder via a hopper. Alternatively, at least one of the components can be incorporated into the composition by feeding it directly into the extruder at the throat or downstream through a sidestuffer, or by being compounded into a masterbatch with a desired polymer and fed into the extruder. The extruder can generally be operated at a temperature higher than that necessary to cause the composition to melt and flow. The extrudate can be quenched in a water bath and pelletized. The pellets so prepared can be any desired length (e.g., one-fourth inch long or less). Such pellets can be used for subsequent molding, shaping, or forming.

D. Articles of Manufacture

The thermoplastic composition of the present invention can be comprised in an article of manufacture. The article of manufacture can include, articles including a molded article, a thermoformed article, an extruded film, an extruded sheet, one or more layers of a multi-layer article, a substrate for a coated article, or a substrate for a metallized article. The articles can be partially or completely coated with, e.g., a hard coat, a UV protective coat, an anti-refractive coat, an anti-reflective coat, a scratch resistant coat, or a combination thereof, or metallized.

Exemplary articles of manufacture include a lens, a light guide, a waveguide, a collimator, an optical fiber, a window, a door, a visor, a display screen, an electronic device, a scientific or medical device, an autoclavable article, a safety shield, a fire shield, wire or cable sheathing, a mold, a dish, a tray, a screen, an enclosure, glazing, packaging, a gas barrier, an anti-fog layer, or an anti-reflective layer. In some aspects, the article of manufacture can be an optical component of an electronic device or a flash light lens. The thermoplastic compositions and/or articles of manufacture can be used in component of a device comprising a lens, a device comprising a light guide, a device comprising a waveguide, a device comprising a collimator, a device comprising an optical fiber, a device comprising a lighting element, a device comprising a window, a device comprising a door, or the article is a structural component of a vehicle, a building, or an appliance, or the article is a component of a medical device, a component of a display screen, a component of an electronic device, a component of a safety device, a component of a screen, a component of conveyor, a component of a mold, a component of a dish, a component of an enclosure, a component of packaging, a component of a gas barrier, a component of an encapsulant, a component of a label, a component of a gas. The thermoplastic compositions can be provided as pellets and are useful to form transparent optical devices such as windows, sight glasses, visors, films, and lenses via various methods. The methods to make the optical articles are not particularly limited. Exemplary methods include part production via multi-cavity tools; molding such as injection molding, gas assist injection molding, vacuum molding, over-molding, compression molding, rotary molding, heat/cool molding, overmolding, transfer molding, or cavity molding; thermoforming; extruding; calendaring; casting; and the like.

Advantageously, the optical articles can have no significant part distortion or discoloration when the articles are subjected to a secondary operation such as over-molding, or coating with high temperature curing, or a combination thereof. High temperature cure of a coating can be, for example, 100°C or higher, for example 100-250°C. In some aspects, "no significant part distortion" includes a volume distortion of less than 10 volume percent (vol%), or less than 5 vol%, or less than 1 vol%. Significant discoloration can be detected by the unaided eye at a distance of 18 inches. The polycarbonate compositions, which have good flow (MVR) for excellent mold filling properties while maintaining desirable mechanical properties can, in the manufacture of optical articles, provide a high degree of reproducibility for successive optical articles molded from the polycarbonate composition.

The lens can be a planar (flat) lens, a curved lens, a cylindrical lens, a toric lens, a sphero-cylindrical lens, a fresnel lens, a convex lens, a biconvex lens, a concave lens, a biconcave lens, a convex-concave lens, a plano-convex lens, a plano-concave lens, a lenticular lens, a gradient index lens, an axicon lens, a conical lens, an astigmatic lens, an aspheric lens, a corrective lens, a diverging lens, a converging lens, a compound lens, a photographic lens, a doublet lens, a triplet lens, an achromatic lens, or a multi-array lens. Thus, the lens can be a layer of a multi-layer lens. The lens can be hard coated.

The lens can have an overall diameter of 0.1 mm-500 cm, or 0.25 mm-cm, or 0.5 mm-2 cm, or 0.5-20 mm. The lenses can have surface textures such as a macrotexture, a microtexture, a nanotexture, or a combination thereof on a surface of the lenses. Textures can also be imparted to the lenses using methods known in the art including calendaring or embossing techniques. In an aspect, the lenses can pass through a gap between a pair of rolls with at least one roll having an embossed pattern thereon, to transfer the embossed pattern to a surface of the lenses. Textures can be applied to control gloss or reflection.

The shape of the lenses is not particularly limited. The lenses can also have different types. For example, the lenses can be a flat or planar lens, a curved lens, a cylindrical lens, a toric or sphero-cylindrical lens, a fresnel lens, a convex lens, a biconvex lens, a concave lens, a biconcave lens, a convex-concave lens, a plano-convex lens, a plano-concave lens, a lenticular lens, a gradient index lens, an axicon lens, a conical lens, an astigmatic lens, an aspheric lens, a corrective lens, a diverging lens, a converging lens, a compound lens, a photographic lens, a doublet lens, a triplet lens, an achromatic lens, or a multi-array lens.

The optical articles such as lenses can further comprise an indicium or a coating disposed on at least a portion of

one or both sides of the lens to impart additional properties such as scratch resistance, ultra violet light resistance, aesthetic appeal, hydrophilicity, hydrophobicity, and the like. In an aspect, the coating is a hard coat, a UV protective coat, an anti-refractive coat, an anti-reflective coat, a scratch resistant coat, a hydrophobic coat, a hydrophilic coat, or a combination thereof. Coatings can be applied through standard application techniques such as overmolding, rolling, spraying, dipping, brushing, flow coating, or a combination thereof.

Depending on the applications, at least a portion of a surface of the optical articles such as lens is metallized in some aspects. A metal layer can be disposed onto the surface of the optical articles with the aid of electrocoating deposition, physical vapor deposition, or chemical vapor deposition or a suitable combination of these methods. Sputtering processes can also be used. The metal layer resulting from the metallizing process (e.g., by vapor deposition) can be 0.001-50 micrometers ($\mu$m) thick. Chrome, nickel, aluminum, and the like can be listed as examples of vaporizing metals. Aluminum vapor deposition is used in an aspect as metal vapor deposition. The surface of the molded substrate can be treated with plasma, cleaned, or degreased before vapor deposition in order to increase adhesion.

The optical articles such as lenses can have low birefringence, which means that the optical articles can have low light distortion and a better-quality image.

Exemplary lenses include a flash light lens, a camera lens, a sensor lens, an illumination lens, a safety glass lens, an ophthalmic corrective lens, or an imaging lens.

The foregoing types of lenses can be used in a wide variety of applications. For example, the camera lens can be a mobile phone camera lens, a table camera lens, a security camera lens, a mobile phone camera lens, a tablet camera lens, a laptop camera lens, a security camera lens, a camera sensor lens, a copier camera lens, or a vehicle camera lens (e.g., an automotive camera lens).

The sensor lens can be a motion detector lens, a proximity sensor lens, a gesture control lens, an infrared sensor lens, or a camera sensor lens.

The illumination lens can be an indoor lighting lens, an outdoor lighting lens, vehicle headlamp lens, a vehicle foglight lens, a vehicle rearlight lens, a vehicle running light lens, a vehicle foglight lens, a vehicle interior lens, a light emitting diode (LED) lens, or an organic light emitting diode (OLED) lens. The safety glass lens is a glasses lens, a goggles lens, a visor, a helmet lens, or other protective gear.

The ophthalmic corrective lens can be incorporated into monocles, corrective glasses (including bifocals, trifocals, progressive lens, and the like), contact lenses, and the like.

The imaging lens can be a scanner lens, a projector lens, a magnifying glass lens, a microscope lens, a telescope lens, a security lens, reading glasses lens, and the like.

Accordingly, the lenses can be incorporated into a wide variety of devices, including a camera (including reflex cameras), an electronic device (such as mobile phones, tablets, laptop computers, and desk computers), a vehicle (which as used herein means any transportation devices, for example bicycles, scooters, motorcycles, automobiles, buses, trains, boats, ships, and aircraft) a flashlight, a business machine (such as a copier or a scanner), a lighting device (including indoor lighting such as table lamps and ceiling lights, outdoor lighting such as floodlights and streetlights, vehicle headlights, rearlights, side lights, running lights, foglights, and interior lights), an imaging device (such as a microscope, a telescope, a projector, a security lens (e.g. in a door), or reading glasses), a safety article (such as goggles, glasses, and headgear such as helmets), a vision corrective article (glasses or contact lens), or a toy.

Optical devices can also be windows, and sight glasses such as microwave windows, visors, a safety goggle, a face shield, a fire shield, a helmet, a respirator, a component of a display screen, including a liquid crystal display screen, or an organic light-emitting diode display screen, a component of a screen such as a mining ore screen, a structural component of a building, a vehicle, or an appliance such as a pump, a microwave, a dishwasher, or a stove, a component of packaging, a component of an anti-fog assembly, or a component of an anti-reflective assembly.

The polycarbonate composition can be molded into useful shaped articles by a variety of methods, such as injection molding, extrusion, rotational molding, blow molding, and thermoforming. Article of manufacture can includes any of the fiber-containing composites of the present disclosure or laminates made therefrom.

## EXAMPLES

The present invention will be described in greater detail by way of specific examples. The following examples are offered for illustrative purposes only. Those of skill in the art will readily recognize a variety of noncritical parameters which can be changed or modified to yield essentially the same results.

### Example 1

### Compositions containing co-Polycarbonate

Thermoplastic compositions containing copolycarbonates were prepared by compounding components according to the concentration shown in Table 1. Copolycarbonate A contains 55 mol. % of the low heat carbonate of Formula IV and 45 mol. % of the phthalimidine carbonate of Formula II. Copolycarbonate B contains 67 mol. % of the low heat carbonate of Formula IV and 33 mol. % of the phthalimidine carbonate of Formula II. CYASORB UV-3638 was obtained Cytec Industries. UVA-234, also known as TINUVIN 234 was obtained from BASF. Tris(2,4-di-tert.-butylphenyl)phosphite (IRGAFOS 168 sold by BASF) was used as the phosphite stabilizer. Octadecyl-3-[3,5-di-tert-butyl-4-hydroxyphenyl] propionate (IRGANOX 1076 sold by BASF) was used as the Hinder phenol anti-oxidant.

Table 1: Thermoplastic compositions

| Component | Comparative Composition A (wt. %) | Comparative Composition B (wt. %) | Composition 1 (wt. %) | Composition 2 (wt. %) | Composition 3 (wt. %) |
|---|---|---|---|---|---|
| Solvent Blue 97 | 0.00016 | 0.00016 | 0.00016 | 0.00016 | 0.00016 |
| Solvent Violet 36 | 0.000076 | 0.000076 | 0.000076 | 0.000076 | 0.000076 |
| Phosphite Stabilizer | 0.1 | 0.1 | 0.1 | 0.1 | 0.1 |
| Pentaerythritol Tetrastearate | 0.3 | 0.3 | 0.3 | 0.3 | 0.3 |
| Copolycarbonate A | 49.579 | 49.429 | 49.529 | 49.514 | 49.479 |
| Copolycarbonate B | 49.580764 | 49.430764 | 49.530764 | 49.515764 | 49.480764 |
| Butyl Tosylate | 0.4 | 0.4 | 0.4 | 0.4 | 0.4 |
| Hindered Phenol Anti-Oxidant | 0.04 | 0.04 | 0.04 | 0.04 | 0.04 |
| Cyasorb UV-3638 | 0 | 0 | 0.1 | 0.13 | 0.2 |
| UVA 234 | 0 | 0.3 | 0 | 0 | |
| | 100 | 100 | 100 | 100 | 100 |

Table 2: Color and optical properties of the thermoplastic compositions

| | Melt Temp. ($^0$C) | YI | %T | Haze |
|---|---|---|---|---|
| Comparative Composition A | 340 | 0.722 | 90.16 | 0.632 |
| Comparative Composition B | 340 | 1.412 | 90.18 | 0.516 |
| Composition 1 | 340 | 0.914 | 90.22 | 0.552 |
| Composition 2 | 340 | 0.956 | 90.4 | 0.552 |
| Composition 3 | 340 | 1.3 | 90.06 | 0.676 |

Color and optical performance of the comparative compositions A-B and compositions 1-3 were studied. Melt temperature was determined by DSC as per ASTM D3418 with a 20°C/min heating rate. Yellowness index (YI) were determined as per ASTM D1925 on a plaque having a thickness of 1 mm. YI was measured by X-rite Ci7800 instrument benchtop spectrophotometer, in transmittance mode with ILLC illumination 2 degree. Haze was measured as per ASTM D1003-00 using the color space CIE1931 (Illuminant C and a 2° observer) on a molded plaque with a 1 mm thickness. Percent transmission (%T) was measured as per ASTM D1003-00 on a molded plaque with a 1.0 mm thickness. %T and haze was measured using Haze-gard i by BYK instrument. And T% was measured over a range not at a single wavelength. Haze has a unit of %. Delta E was calculated based on L, a, b color measurement according to G100432-ASTM D4459.

The YI values presented in Table 2 shows compositions 1, 2 and 3 have low initial color. Whereas, comparative composition B containing 0.3 wt. % of the UV absorber UVA 234 shows comparatively high initial color. Compositions 1, 2 and 3 shows high % T values. FIG. 1 shows comparative composition B has higher absorption (lower transmission) at the high wavelength range in UV (380nm to 420nm), which led to increased yellowness.

FIG. 2 shows the color shift, Delta E, values for the compositions with UV exposures of 0 hr, 100 hrs, 200 hrs and 300 hrs. Delta E value of the comparative composition A indicates the composition without an UV absorber has low UV absorption capabilities. Compositions 1, 2, and 3 shows good UV absorption.

Thus compositions according to the examples of the current invention (compositions 1, 2 and 3) show low YI and good UV absorption properties. Whereas, comparative composition B containing 0.3 wt. % of the UV absorber UVA 234 shows comparatively higher YI. Comparative composition A containing no UV absorber shows lower initial YI, but has poor

protection against UV radiation.

## Claims

1. A thermoplastic composition comprising:

   a) a high heat copolycarbonate comprising recurring units of i) a phthalimidine carbonate and ii) a low heat monomer; and
   b) 0.05 wt. % to 0.25 wt. % of a benzoxazinone UV absorber.

2. The thermoplastic composition of claim 1, comprising 0.1 wt. % to 0.2 wt. % or 0.1 wt. % to 0.16 wt. % of the benzoxazinone UV absorber.

3. The thermoplastic composition of any one of claims 1 or 2, wherein the benzoxazinone UV absorber is 2,2'-(1,4-Phenylene)bis[4H-3,1-benzoxazin-4-one].

4. The thermoplastic composition of any one of claims 1 to 3, comprising 95 wt. % to 99.5 wt. % of the high heat copolycarbonate.

5. The thermoplastic composition of any one of claims 1 to 4, wherein the high heat copolycarbonate comprises 5-95 mol. %, preferably 20-80 mol. %, more preferably 30-60 mol. % of the phthalimidine carbonate.

6. The thermoplastic composition of any one of claims 1 to 5, wherein the phthalimidine carbonate has the chemical formula of Formula I

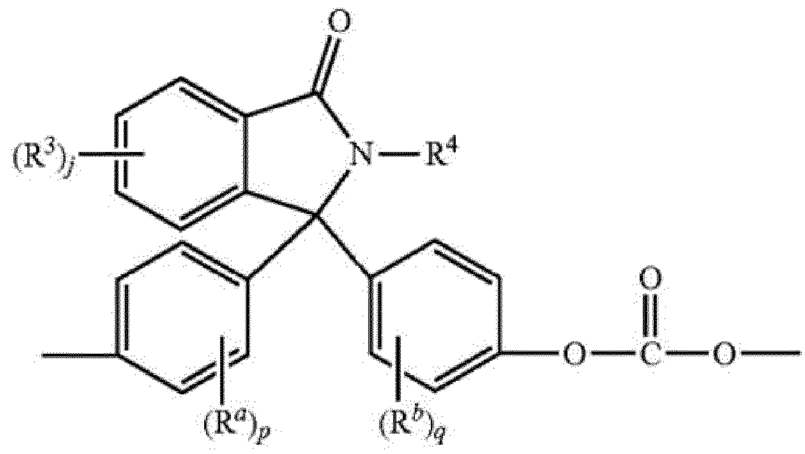

Formula I

   wherein $R^a$ and $R^b$ are each independently a $C_{1-12}$ alkyl, a $C_{2-12}$ alkenyl, a $C_{3-8}$ cycloalkyl, or a $C_{1-12}$ alkoxy; each $R^3$ is independently a $C_{1-6}$ alkyl; $R^4$ is hydrogen, a $C_{1-6}$ alkyl, an aryl, or a substituted aryl; and j, p, and q are independently 0-4.

7. The thermoplastic composition of any one of claims 1 to 6, wherein the phthalimidine carbonate has the chemical formula of Formula II

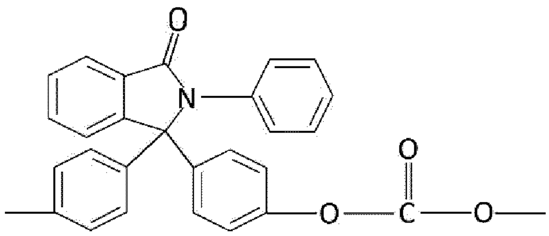

Formula II

8. The thermoplastic composition of any one of claims 1 to 7, wherein the low heat monomer is a low heat carbonate, wherein the low heat carbonate has the chemical formula of Formula III

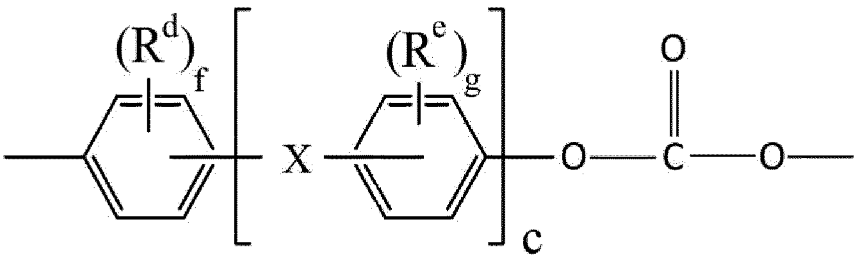

Formula III

wherein $R^d$ and $R^e$ are each independently a halogen, a $C_{1-3}$ alkoxy, or a $C_{1-3}$ alkyl; c is 0-4; f and g are each independently 0 or 1; X is a single bond, -O-, -C(O)-, or a $C_{1-6}$ alkyl, a $C_{1-6}$ substituted alkyl, a $C_{3-6}$ cycloalkyl, or a $C_{1-6}$ heteroalkyl.

9. The thermoplastic composition of claim 8, wherein the high heat copolycarbonate comprises 5-95 mol. %, preferably 30-80 mol. %, more preferably 40-70 mol. % percent of the low heat carbonate.

10. The thermoplastic composition of any one of claims 8 or 9, wherein in the high heat copolycarbonate, the phthalimidine carbonate and the low heat carbonate units are arranged in blocks, alternatively and/or randomly.

11. The thermoplastic composition of any one of claims 8 to 10, wherein the low heat carbonate has the chemical formula of Formula IV

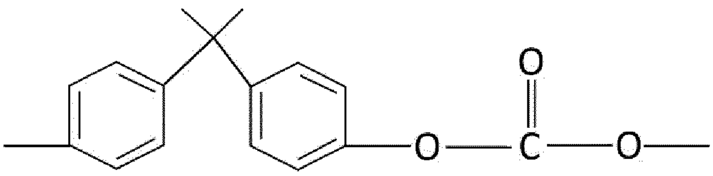

Formula IV

12. The thermoplastic composition of claim 11, wherein the high heat copolycarbonate comprises 30-60 mol. % of the phthalimidine carbonate of formula II and 40-70 mol. % of the low heat carbonate of formula IV.

13. The thermoplastic composition of claim 11 or 12, wherein the high heat copolycarbonate comprises a first high heat copolycarbonate comprising 30-40 mol. % of the phthalimidine carbonate of Formula II and 60-70 mol. % of the low heat carbonate of Formula IV, and a second high heat copolycarbonate comprising greater than 40 to 50 mol. % of the phthalimidine carbonate of Formula II and 50 to less than 60 mol. % of the low heat carbonate of Formula IV, wherein the first and second high heat copolycarbonate are different.

14. The thermoplastic composition of claim 13, wherein the composition comprises 45 wt.% to 54 wt. % of the first high heat copolycarbonate and 45 wt.% to 54 wt. % of the second high heat copolycarbonate and/or wherein the first and/or second high heat copolycarbonate independently has a weight average molecular weight of 17,000 D to 28,000 D,

preferably 20,000 D to 24,000 D, measured as indicated in the specification.

**15.** An article of manufacture comprising a thermoplastic composition as defined in any one of claims 1-14.

## Patentansprüche

**1.** Thermoplastische Zusammensetzung, umfassend:

a) ein hochtemperaturbeständiges Copolycarbonat, umfassend wiederkehrende Einheiten von i) einem Phthalimidin-Carbonat und ii) einem niedertemperaturbeständigen Monomer; und
b) 0,05 Gew.-% bis 0,25 Gew.-% eines Benzoxazinon-UV-Absorbers.

**2.** Thermoplastische Zusammensetzung nach Anspruch 1, umfassend 0,1 Gew.-% bis 0,2 Gew.-% oder 0,1 Gew.-% bis 0,16 Gew.-% des Benzoxazinon-UV-Absorbers.

**3.** Thermoplastische Zusammensetzung nach einem der Ansprüche 1 oder 2, wobei der Benzoxazinon-UV-Absorber 2,2'-(1,4-Phenylen)bis[4H-3,1-benzoxazin-4-on] ist.

**4.** Thermoplastische Zusammensetzung nach einem der Ansprüche 1 bis 3, umfassend 95 Gew.-% bis 99,5 Gew.-% des hochtemperaturbeständigen Copolycarbonats.

**5.** Thermoplastische Zusammensetzung nach einem der Ansprüche 1 bis 4, wobei das hochtemperaturbeständige Copolycarbonat 5-95 Mol-%, bevorzugt 20-80 Mol-%, bevorzugter 30-60 Mol-%, des Phthalimidin-Carbonats umfasst.

**6.** Thermoplastische Zusammensetzung nach einem der Ansprüche 1 bis 5, wobei das Phthalimidin-Carbonat die chemische Formel von Formel I aufweist

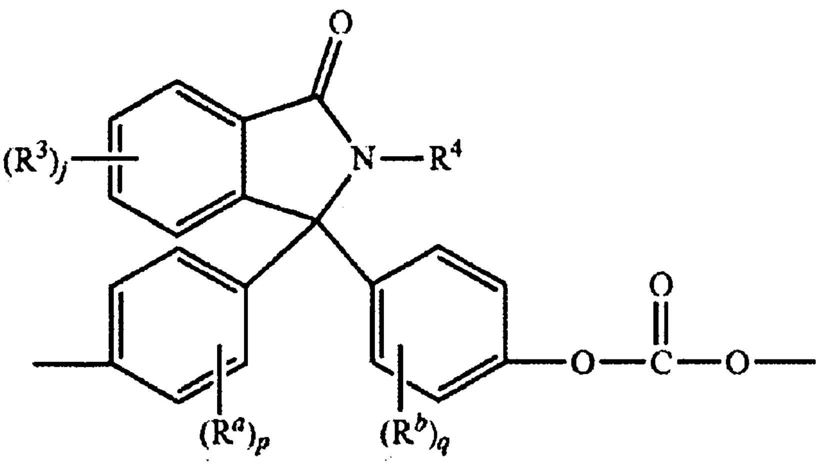

Formel I

wobei $R^a$ und $R^b$ jeweils unabhängig ein $C_{1-12}$-Alkyl, ein $C_{2-12}$-Alkenyl, ein $C_{3-8}$-Cycloalkyl oder ein $C_{1-12}$-Alkoxy sind; jedes $R^3$ unabhängig ein $C_{1-6}$-Alkyl ist; $R^4$ Wasserstoff, ein $C_{1-6}$-Alkyl, ein Aryl oder ein substituiertes Aryl ist; und j, p und q unabhängig 0-4 sind.

**7.** Thermoplastische Zusammensetzung nach einem der Ansprüche 1 bis 6, wobei das Phthalimidin-Carbonat die chemische Formel II aufweist

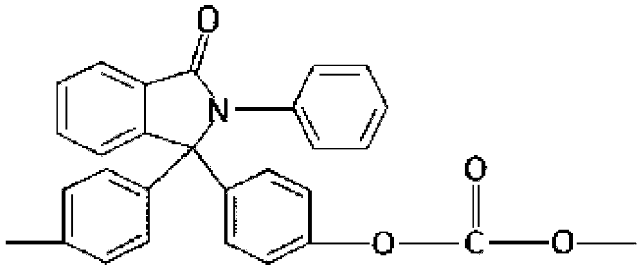

Formel II

**8.** Thermoplastische Zusammensetzung nach einem der Ansprüche 1 bis 7, wobei das niedertemperaturbeständige Monomer ein niedertemperaturbeständiges Carbonat ist, wobei das niedertemperaturbeständige Carbonat die chemische Formel von Formel III aufweist

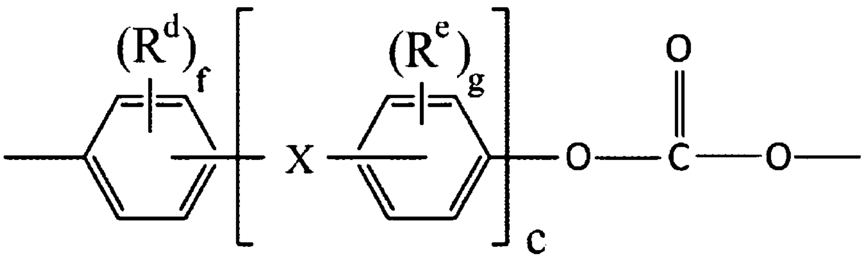

Formel III

wobei $R^d$ und $R^e$ jeweils unabhängig ein Halogen, ein $C_{1-3}$-Alkoxy oder ein $C_{1-3}$-Alkyl sind; c 0-4 ist; f und g jeweils unabhängig 0 oder 1 sind; X eine Einzelbindung, -O-, -C(O)- oder ein $C_{1-6}$-Alkyl, ein substituiertes $C_{1-6}$-Alkyl, ein $C_{3-6}$-Cycloalkyl oder ein $C_{1-6}$-Heteroalkyl ist.

**9.** Thermoplastische Zusammensetzung nach Anspruch 8, wobei das hochtemperaturbeständige Copolycarbonat 5-95 Mol-%, bevorzugt 30-80 Mol-%, bevorzugter 40-70 Mol-% des niedertemperaturbeständigen Carbonats umfasst.

**10.** Thermoplastische Zusammensetzung nach einem der Ansprüche 8 oder 9, wobei in dem hochtemperaturbeständigen Copolycarbonat das Phthalimidin-Carbonat und die niedertemperaturbeständigen Carbonateinheiten in Blöcken alternativ und/oder zufällig angeordnet sind.

**11.** Thermoplastische Zusammensetzung nach einem der Ansprüche 8 bis 10, wobei das niedertemperaturbeständige Carbonat die chemische Formel von Formel IV aufweist

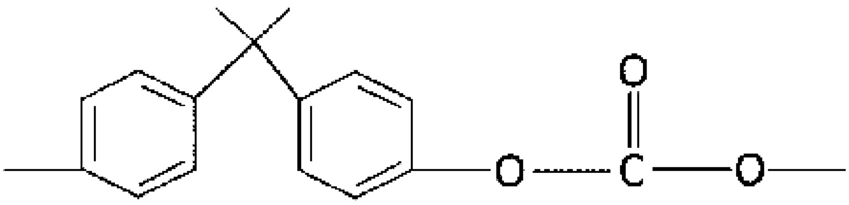

Formel IV

**12.** Thermoplastische Zusammensetzung nach Anspruch 11, wobei das hochtemperaturbeständige Copolycarbonat 30-60 Mol-% des Phthalimidin-Carbonats von Formel II und 40-70 Mol-% des niedertemperaturbeständigen Carbonats von Formel IV umfasst.

**13.** Thermoplastische Zusammensetzung nach Anspruch 11 oder 12, wobei das hochtemperaturbeständige Copolycarbonat ein erstes hochtemperaturbeständiges Copolycarbonat, umfassend 30-40 Mol-% des Phthalimidin-Carbonats von Formel II und 60-70 Mol-% des niedertemperaturbeständigen Carbonats von Formel IV, und ein zweites

hochtemperaturbeständiges Copolycarbonat, umfassend mehr als 40 bis 50 Mol-% des Phthalimidin-Carbonats von Formel II und 50 bis weniger als 60 Mol-% des niedertemperaturbeständigen Carbonats von Formel IV umfasst, wobei das erste und zweite hochtemperaturbeständige Copolycarbonat unterschiedlich sind.

**14.** Thermoplastische Zusammensetzung nach Anspruch 13, wobei die Zusammensetzung 45 Gew.-% bis 54 Gew.-% des ersten hochtemperaturbeständigen Copolycarbonats und 45 Gew.-% bis 54 Gew.-% des zweiten hochtemperaturbeständigen Copolycarbonats umfasst, und/oder wobei das erste und/oder zweite hochtemperaturbeständige Copolycarbonat unabhängig ein Gewichtsmittel des Molekulargewichts von 17.000 D bis 28.000 D, bevorzugt 20.000 D bis 24.000 D aufweist, gemessen wie in der Beschreibung angegeben.

**15.** Herstellungsartikel, umfassend eine thermoplastische Zusammensetzung nach einem der Ansprüche 1-14.

## Revendications

**1.** Composition thermoplastique, comprenant :

a) un copolycarbonate à haute température comprenant des unités récurrentes i) d'un carbonate de phtalimidine et ii) d'un monomère à basse température ; et
b) de 0,05 % en poids à 0,25 % en poids d'un absorbeur d'UV à base de benzoxazinone.

**2.** Composition thermoplastique de la revendication 1, comprenant de 0,1 % en poids à 0,2 % en poids ou de 0,1 % en poids à 0,16 % en poids de l'absorbeur d'UV à base de benzoxazinone.

**3.** Composition thermoplastique de l'une quelconque des revendications 1 ou 2, dans laquelle l'absorbeur d'UV à base de benzoxazinone est 2,2'-(1,4-phénylène)bis[4H-3,1-benzoxazin-4-one].

**4.** Composition thermoplastique de l'une quelconque des revendications 1 à 3, comprenant de 95 % en poids à 99,5 % en poids du copolycarbonate à haute température.

**5.** Composition thermoplastique de l'une quelconque des revendications 1 à 4, dans laquelle le copolycarbonate à haute température comprend de 5 à 95 % molaire, de préférence de 20 à 80 % molaire, mieux encore de 30 à 60 % molaire du carbonate de phtalimidine.

**6.** Composition thermoplastique de l'une quelconque des revendications 1 à 5, dans laquelle le carbonate de phtalimidine a la formule chimique de la formule I

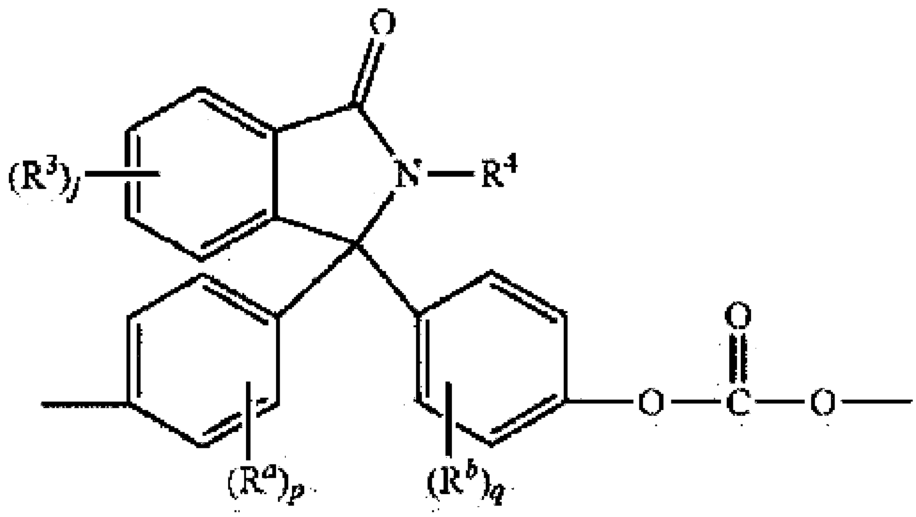

Formule I

dans laquelle $R^a$ et $R^b$ sont chacun indépendamment un alkyle en $C_{1-12}$, un alcényle en $C_{2-12}$, un cycloalkyle en $C_{3-8}$,

ou un alkoxy en $C_{1-12}$ ; chaque $R^3$ est indépendamment un alkyle en $C_{1-6}$ ; $R^4$ est hydrogène, un alkyle en $C_{1-6}$, un aryle, ou un aryle substitué ; et j, p, et q sont indépendamment 0 à 4.

**7.** Composition thermoplastique de l'une quelconque des revendications 1 à 6, dans laquelle le carbonate de phtalimidine a la formule chimique de la formule II

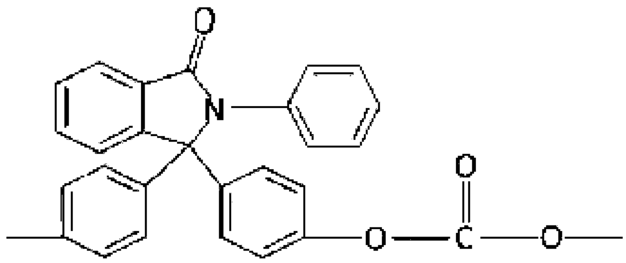

Formule II

**8.** Composition thermoplastique de l'une quelconque des revendications 1 à 7, dans laquelle le monomère à basse température est un carbonate à basse température, dans laquelle le carbonate à basse température a la formule chimique de la formule III

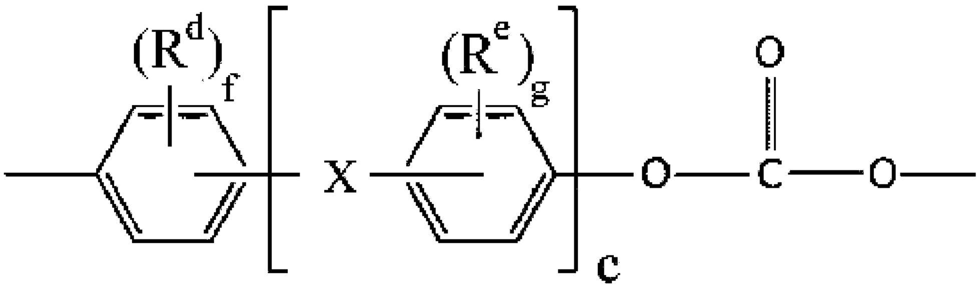

Formule III

dans laquelle $R^d$ et $R^e$ sont chacun indépendamment un halogène, un alkoxy en $C_{1-3}$, ou un alkyle en $C_{1-3}$ ; c est 0 à 4 ; f et g sont chacun indépendamment 0 ou 1 ; X est une seule liaison, -O-, -C(O)-, ou un alkyle en $C_{1-6}$, un alkyle substitué en $C_{1-6}$, un cycloalkyle en $C_{3-6}$, ou un hétéroalkyle en $C_{1-6}$.

**9.** Composition thermoplastique de la revendication 8, dans laquelle le copolycarbonate à haute température comprend de 5 à 95 % molaire, de préférence de 30 à 80 % molaire, mieux encore de 40 à 70 % molaire du carbonate à basse température.

**10.** Composition thermoplastique de l'une quelconque des revendications 8 ou 9, dans laquelle dans le copolycarbonate à haute température, les unités carbonate de phtalimidine et carbonate à basse température sont agencées en blocs, de façon alternée et/ou aléatoirement.

**11.** Composition thermoplastique de l'une quelconque des revendications 8 à 10, dans laquelle le carbonate à basse température a la formule chimique de la formule IV

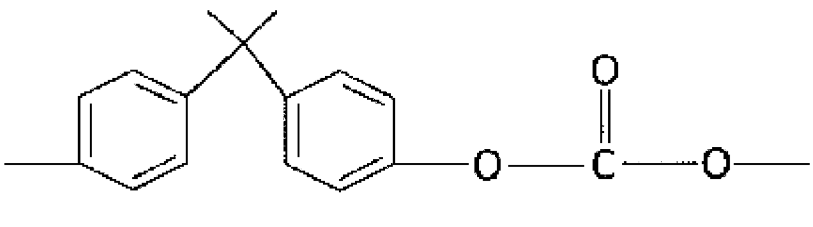

Formule IV

**12.** Composition thermoplastique de la revendication 11, dans laquelle le copolycarbonate à haute température comprend de 30 à 60 % molaire du carbonate de phtalimidine de la formule II et de 40 à 70 % molaire du carbonate à basse température de la formule IV.

**13.** Composition thermoplastique de la revendication 11 ou 12, dans laquelle le copolycarbonate à haute température comprend un premier copolycarbonate à haute température comprenant de 30 à 40 % molaire du carbonate de phtalimidine de la formule II et de 60 à 70 % molaire du carbonate à basse température de la formule IV, et un second copolycarbonate à haute température comprenant plus de 40 à 50 % molaire du carbonate de phtalimidine de la formule II et 50 à moins de 60 % molaire du carbonate à basse température de la formule IV, dans laquelle le premier et le second copolycarbonate à haute température sont différents.

**14.** Composition thermoplastique de la revendication 13, dans laquelle la composition comprend de 45 % en poids à 54 % en poids du premier copolycarbonate à haute température et de 45 % en poids à 54 % en poids du second copolycarbonate à haute température et/ou dans laquelle le premier et/ou le second copolycarbonate à haute température a indépendamment un poids moléculaire moyen en poids de 17 000 D à 28 000 D, de préférence de 20 000 D à 24 000 D, mesuré comme cela est indiqué dans la description.

**15.** Article de fabrication, comprenant une composition thermoplastique telle que définie dans l'une quelconque des revendications 1 à 14.

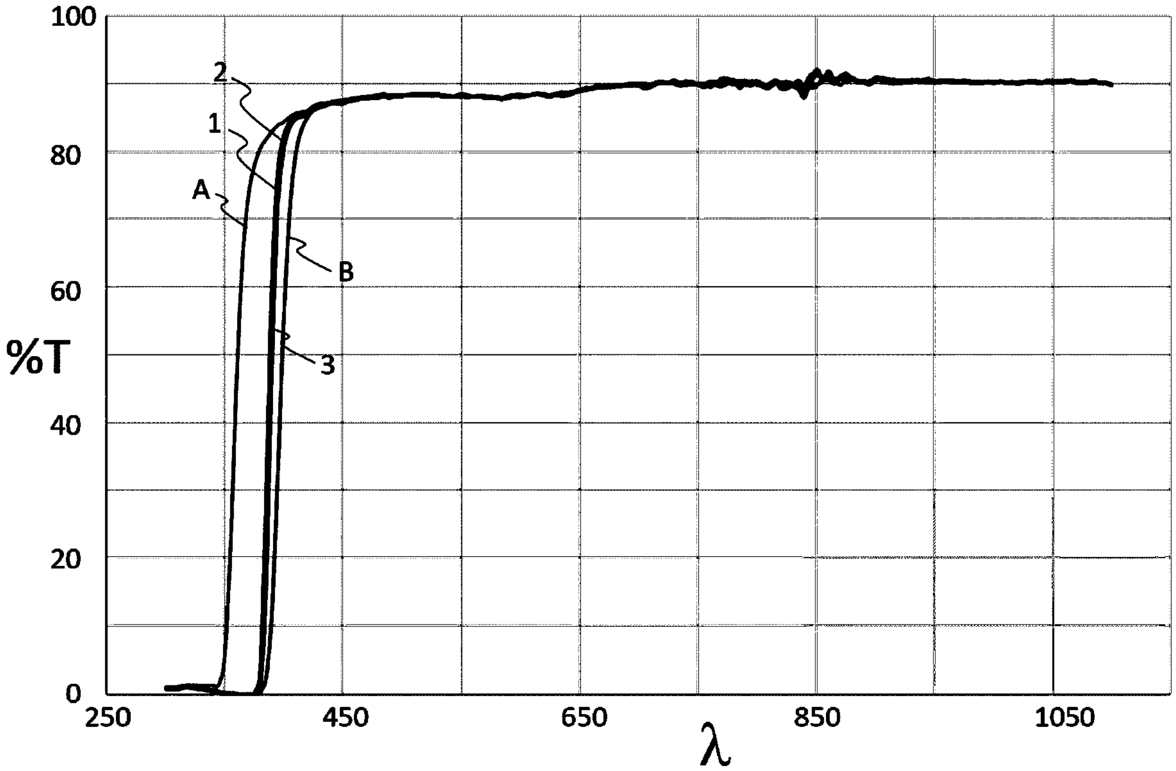
100
80
60
40
20
0
%T
250
450
650
850
1050
λ
2
1
A
B
3

FIG. 1

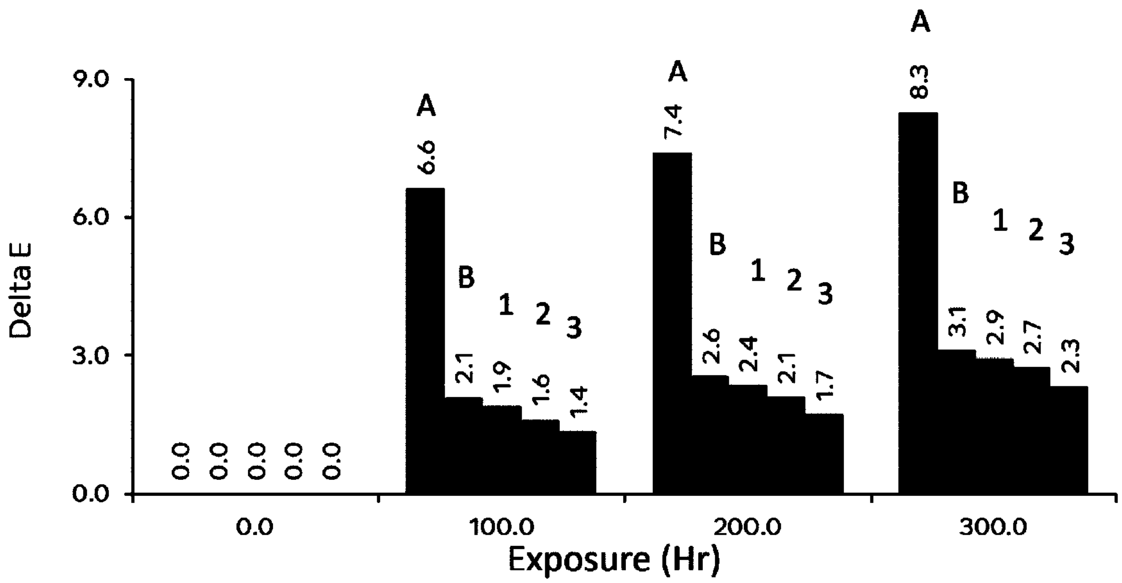
9.0
6.0
3.0
0.0
Delta E
A
B
1
2
3
0.0
0.0
0.0
0.0
0.0
6.6
2.1
1.9
1.6
1.4
7.4
2.6
2.4
2.1
1.7
8.3
3.1
2.9
2.7
2.3
0.0
100.0
200.0
300.0
Exposure (Hr)

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8748518 B
- WO 2017203493 A1
- US 7277230 B
- WO 2007136934 A
- WO 2013175448 A1
- US 20140295363 A
- WO 2014072923 A
- US 9718918 B
- WO 2015048735 A


### Non-patent literature cited in the description


- *CHEMICAL ABSTRACTS*, 128-37-0
- *CHEMICAL ABSTRACTS*, 6683-19-8
- *CHEMICAL ABSTRACTS*, 2082-79-3
- *CHEMICAL ABSTRACTS*, 1709-70-2
- *CHEMICAL ABSTRACTS*, 41484-35-9
- *CHEMICAL ABSTRACTS*, 65140-91-2
- *CHEMICAL ABSTRACTS*, 27676-62-6
- *CHEMICAL ABSTRACTS*, 40601-76-1
- *CHEMICAL ABSTRACTS*, 32509-66-3
- *CHEMICAL ABSTRACTS*, 96-69-5
- *CHEMICAL ABSTRACTS*, 77-62-3
- *CHEMICAL ABSTRACTS*, 23128-74-7
- *CHEMICAL ABSTRACTS*, 10191-41-0
- *CHEMICAL ABSTRACTS*, 35958-30-6
- *CHEMICAL ABSTRACTS*, 1843-03-4
- *CHEMICAL ABSTRACTS*, 90498-90-1
- *CHEMICAL ABSTRACTS*, 35074-77-2
- *CHEMICAL ABSTRACTS*, 4306-88-1
- *CHEMICAL ABSTRACTS*, 85-60-9
- *CHEMICAL ABSTRACTS*, 119-47-1
- *CHEMICAL ABSTRACTS*, 36443-68-2
- *CHEMICAL ABSTRACTS*, 171090-93-0
- *CHEMICAL ABSTRACTS*, 90-66-4
- *CHEMICAL ABSTRACTS*, 976-56-7
- *CHEMICAL ABSTRACTS*, 110553-27-0
- *CHEMICAL ABSTRACTS*, 125643-61-0
- *CHEMICAL ABSTRACTS*, 180002-86-2
- *CHEMICAL ABSTRACTS*, 68610-06-0
- *CHEMICAL ABSTRACTS*, 68610-51-5
- *CHEMICAL ABSTRACTS*, 31570-04-4
- *CHEMICAL ABSTRACTS*, 95906-11-9
- *CHEMICAL ABSTRACTS*, 26741-53-7
- *CHEMICAL ABSTRACTS*, 119345-01-6
- *CHEMICAL ABSTRACTS*, 154862-43-8
- *CHEMICAL ABSTRACTS*, 693-36-7